# EUROPEAN PATENT SPECIFICATION

(11) **EP 2 801 553 B1**
(45) Date of publication and mention of the grant of the patent: **13.03.2019**
(21) Application number: 14167355.8
(22) Date of filing: 07.05.2014
(51) Int. Cl.: C02F 1/28

(54) **Process for the regeneration of iron oxyhydroxide-based filtration material for arsenic**
Verfahren zur Regenerierung von Eisenoxyhydroxid-basierte Filtermaterial für Arsen
Procédé pour la régénération de matériau de filtration por l'arsenc à base d'oxyhydroxyde de fer

(30) Priority: 09.05.2013 IT VE20130025
(43) Date of publication of application: 12.11.2014
(73) Proprietor: GRUPPO ZILIO S.R.L., 36022 Cassola (IT)
(72) Inventor: ZILIO, Damiano, 36022 CASSOLA (IT); RAGAZZON, Daniele, 36022 CASSOLA (IT)
(74) Representative: Piovesana, Paolo

(56) References cited:
- EP-A2- 1 961 705
- JP-A- 2000 140 626
- US-A1- 2005 156 136
- US-A1- 2007 114 178
- US-A1- 2007 241 056
- US-A1- 2010 307 972

## Description

The present invention relates to a process for the regeneration of iron oxyhydroxide-based filtration material for arsenic.

Processes for removing arsenic from potable water are known. As arsenic represents a serious risk to human health, the authorities have imposed very severe limits to its concentration in potable water, this limit being currently 10 micrograms per litre in Italy, as recommended by the WHO.

A first process consists of precipitating arsenates and arsenites by flocculation with ferric chloride followed by physical separation of the precipitate from the water.

Another process consists of passing the water to be filtered through a bed of solid filtration material consisting of iron hydroxide, in particular granulated iron oxyhydroxide in the mineralogical form of akaganeite or of goethite or amorphous form.

In both these cases these are solid materials, the first in the form of granules of various shape and size, the second generally in small cylinder or pellet form.

With these materials a filtration layer is formed supported on a perforated base within a purification column, of height suitable to achieve a contact time sufficient for the water which passes through to undergo purification.

The filtration capacity of these materials is very high (of the order of some grams of arsenic per kilogram of filtration material), and as the arsenic concentration in the water to be treated is generally low, the useful life of the filter is several months, if not years.

When the filtration material is saturated with arsenic, it is dumped and replaced by new material.

However the considerable cost of the material, the cost of its dumping, and the requirement to safeguard the environment by limiting the volume of toxic material requiring elimination to the minimum possible, suggest that the filtration material should be recovered instead of dumped.

Given the amphoteric nature of the filtration material, it often happens that this absorbs not only the arsenate anions, but also cations (for example Zn) which go to occupy active sites.

EP 1 961 705 A2 relates to a process for cleaning of arsenic-containing ground- and well water, comprises charging regeneratable arsenic -adsorbent material with arsenic containing solution, regenerating the charged arsenic adsorbent material with sodium hydroxide, optionally washing the regenerated arsenic adsorbent material, neutralizing the regenerate with hydrochloric acid or sulfuric acid, and charging iron hydroxide adsorbent materials with the neutralized regenerate.

An object of the invention is therefore to achieve regeneration of a filtration material saturated with arsenic.

Another object of the invention is to also eliminate cations (for example Zn) which may be absorbed by the filtration material, and hence completely restore its arsenic absorption capacity.

These objects are attained according to the invention by a filtration material regeneration process as described in claim 1.

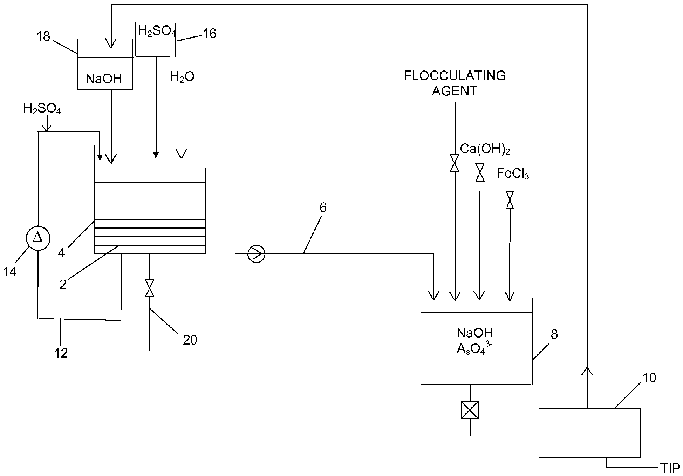

The present invention is further clarified hereinafter by way of a preferred embodiment thereof provided with reference to the accompanying drawing, showing in schematic view a plant for implementing the process of the invention.

As can be seen from the figure, the plant for implementing the process according to the invention comprises substantially a unit 2 containing a filtration material 4 (an iron oxyhydroxide, for example akaganeite), the base of which is connected via a conduit 6 to a precipitator 8 connected to a decanter 10.

The base of the unit 2 is also provided with a recirculation pipe 12 with pump 14.

A further conduit 20 extends from the unit 2, leading to discharge.

The plant also comprises a tank 16 of sulphuric acid, preferably at pH not less than 5.5, and a tank 18 of a strongly basic fluid, for example 0.1-1 molar sodium hydroxide.

According to the process of the invention the sulphuric acid is passed from the tank 16 through the filtration material 4 such as to cause desorption of the cations (normally present in water) previously absorbed by the material, the exit water flow being recirculated several times through the pipe 12 until complete desorption.

The sulphuric acid leaving the unit 2 is fed through the conduit 20 to discharge or to a treatment plant of known type.

A quantity of NaOH is then made to flow through the filter 4 and recirculated through the conduit 12 and pump 14 until the NaOH solution is saturated with arsenic.

The saturated solution is fed to the precipitator 8.

As generally the flow of fed NaOH is not sufficient to remove all the arsenic, a second quantity is fed, and possibly other quantities, each quantity being recirculated through the conduit 12.

By circulating these further quantities of sodium hydroxide though the unit 2, further removal of absorbed arsenic not removed by the first passage is achieved. On termination of this step the unit 2 contains iron oxyhydroxide (akagaenite) free of the previously adsorbed arsenic, but wetted with a strongly basic solution, the precipitator 8 containing a solution of high pH and high arsenic content.

To be able to use the filtration material it must be rinsed such that the effluent has a pH equal to 7.5: this is achieved by recirculating through the unit 2, via the pipe 12, a volume of water equal to about that of the filtration material 4 and continuously feeding an acid, preferably sulphuric acid or CO₂, in the quantity necessary to maintain the pH of the solution which comes into contact with the filtration material at a value not less than 5.5, and continuing the rinsing until the water leaving the material reaches the required pH value of 7.5. At this point the rinsing water can be stored for subsequent use.

The solution, of high pH and of high arsenic content present in the precipitator 8, is treated initially with ferric chloride which, being in a strongly basic environment, precipitates immediately as iron hydroxide and adsorbs a large part of the arsenic present. Then calcium hydroxide is then added to the solution to complete the arsenic precipitation. Finally the addition of a flocculating agent removes the calcium hydroxide remaining in suspension (possibly with adsorbed arsenic) and the process is complete.

The arsenic-rich sludge obtained in this manner is fed onto and left on the base of the decanter 10, and later removed and dumped. The supernatant, consisting of a sodium hydroxide solution, is instead ready to be reused in treating a subsequent quantity of filtration material 4 to be regenerated.

The reason for passing this flow through the filtration material is that the mechanism which lies at the basis of the arsenic absorption on the surface of the iron hydroxide is linked to the presence of surface hydroxyl groups on this material.

As the arsenates are ions carrying a negative charge, absorption effectively takes place when the charge on the absorbent surface is positive. In the case of akaganeite, which constitutes the filtration material, this takes place for example when the pH of the medium in which the absorbent material is located is less than 7.8, which is precisely that of the isoelectric point of the material.

Above this pH value, the effectiveness of the absorbent means is much less, if not zero.

Surprisingly it has been found that as the pH value increases, there is firstly a reduction in the absorbent power, followed by the commencement of release of any arsenate already absorbed by the material. As the absorption kinetics is slow, a contact time of about 1 hour must be ensured, with simultaneous intimate mixing of the sodium hydroxide with the filtration material. This is achieved by recirculating the sodium hydroxide by a pump.

The following is a graph indicating the arsenic concentration at the exit from the filter 4 against recirculation time:

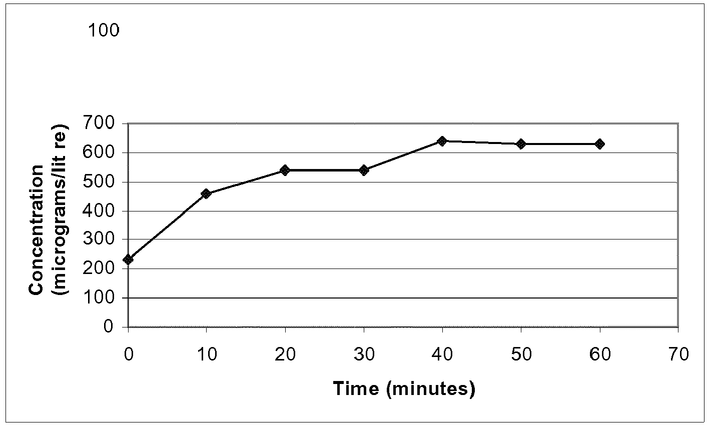

From the graph it can be seen that a contact time of about one hour is sufficient for saturation of the sodium hydroxide.

## Claims

1. A process for the regeneration of **filtration material for arsenic, said filtration material consisting of iron oxyhydroxide, characterised by**:
- passing through the filtration material a flow of sulphuric acid of pH not less than 5.5 until complete desorption of the cations present in the filtration material,
- **subsequently** passing through the filtration material a basic flow at pH >10 and recirculating it through said material for a time sufficient to saturate it with arsenic,
- **sending the arsenic saturated basic flow to a precipitator,**
- passing through the filtration material at least a second quantity of a basic flow to achieve further removal of absorbed arsenic not removed by the first passage,
- rinsing the filtration material with a volume of water equal to its own volume with the addition of an acid such as to maintain the pH of the solution at a value not less than 5.5,
- continuing rinsing by recirculating water until this latter on leaving the filtration material reaches a pH value of about 7.5,
- treating **the arsenic saturated basic flow in said** precipitator, initially with ferric chloride and then with calcium hydroxide until arsenic precipitation is complete,
- adding a flocculating agent to remove the calcium hydroxide remaining in suspension,
- feeding the sludge obtained to a decanter.

2. A process as claimed in claim 1, **characterised by** using 0.1-1 molar sodium hydroxide as the basic flow.

3. A process as claimed in claim 1, **characterised by** adding sulphuric acid to the rinse water.

4. A process as claimed in claim 1, **characterised by** adding CO₂ to the rinse water.

## Patentansprüche

1. Verfahren zur Regenerierung von Filtermaterial für Arsen, wobei das Filtermaterial aus Eisenoxyhydroxid besteht, **gekennzeichnet durch** Folgendes:
- Leiten eines Stroms von Schwefelsäure mit einem pH-Wert von nicht weniger als 5,5 durch das Filtermaterial bis zur vollständigen Desorption der in dem Filtermaterial vorhandenen Kationen,
- nachfolgendes Leiten eines Basisstroms mit einem pH-Wert > 10 durch das Filtermaterial und Rezirkulieren des Basisstroms durch das Material für eine Dauer, die ausreicht, um es mit Arsen zu sättigen,
- Senden des mit Arsen gesättigten Basisstroms zu einem Abscheider,
- Leiten von mindestens einer zweiten Menge eines Basisstroms durch das Filtermaterial, um eine weitere Entfernung von absorbiertem Arsen, das durch den ersten Durchgang nicht entfernt wurde, zu erreichen,
- Spülen des Filtermaterials mit einem Volumen von Wasser entsprechend seinem eigenen Volumen mit der Zugabe einer Säure derart, dass der pH-Wert der Lösung auf einem Wert von nicht weniger als 5,5 gehalten wird,
- Fortsetzen des Spülens durch Rezirkulieren von Wasser, bis dieses Letztere beim Verlassen des Filtermaterials einen pH-Wert von ungefähr 7,5 erreicht,
- Behandeln des mit Arsen gesättigten Basisstroms in dem Abscheider zunächst mit Eisenchlorid und dann mit Kalziumhydroxid, bis die Arsenfällung vollständig ist,
- Zugeben eines Flockungsmittels, um das in Suspension verbleibende Kalziumhydroxid zu entfernen,
- Zuführen des erhaltenen Schlamms zu einem Dekanter.

2. Verfahren nach Anspruch 1, **gekennzeichnet durch** ein Verwenden von 0,1-1 molarem Natriumhydroxid als den Basisstrom.

3. Verfahren nach Anspruch 1, **gekennzeichnet durch** ein Zugeben von Schwefelsäure zu dem Spülwasser.

4. Verfahren nach Anspruch 1, **gekennzeichnet durch** ein Zugeben von CO₂ zu dem Spülwasser.

## Revendications

1. Procédé de régénération de matériau de filtration pur l'arsenic, ledit matériau de filtration consistant en d'oxyhydroxyde, **caractérisé par**:
- passer à travers le matériau de filtration un flux d'acide sulfurique d'un pH d'au moins 5,5 jusqu'à la désorption complète des cations présents dans le matériau de filtration,
- subséquemment faire passer à travers le matériau de filtration un flux basique à pH> 10 et le faire recirculer à travers ledit matériau pendant un temps suffisant pour le saturer d'arsenic,
- envoyer le flux saturé d'arsenic vers un précipitateur,
- passer à travers le matériau de filtration au moins une seconde quantité d'un flux basique pour obtenir une élimination supplémentaire de l'arsenic absorbé non éliminé par le premier passage,
- rincer le matériau de filtration avec un volume d'eau égal à son volume en ajoutant un acide de manière à maintenir le pH de la solution à une valeur non inférieure à 5,5,
- poursuivre le rinçage en faisant recirculer de l'eau jusqu'à ce que ce dernier, à la sortie du matériau de filtration, atteigne un pH d'environ 7,5,
- traiter le flux basique d'arsenic dans ledit précipitateur, d'abord avec du chlorure ferrique, puis avec de l'hydroxyde de calcium jusqu'à la précipitation complète de l'arsenic,
- ajouter un agent floculant pour éliminer l'hydroxyde de calcium restant en suspension,
- alimenter des boues obtenues dans une carafe.

2. Procédé selon la revendication 1, **caractérisé par** l'utilisation de l'hydroxyde de sodium 0,1 à 1 molaire comme flux basique.

3. Procédé selon la revendication 1, **caractérisé par** l'addition d'acide sulfurique à l'eau de rinçage.

4. Procédé selon la revendication 1, **caractérisé par** l'ajout de CO₂ à l'eau de rinçage.
